# FASCICULE DE BREVET EUROPEEN

(11) **EP 3 857 118 B1**
(45) Date de publication et mention de la délivrance du brevet: **14.12.2022**
(21) Numéro de dépôt: 19786646.0
(22) Date de dépôt: 11.09.2019
(51) Int. Cl.: F21S 41/25, B60Q 1/00, F21S 41/50, B60Q 1/04, B60Q 1/26, F21S 41/29, B60J 1/20, B62D 35/00, F21S 41/255, F21S 45/50

(54) **MODULE D'ÉCLAIRAGE POUR PROJECTEUR SANS GLACE DE VÉHICULE AUTOMOBILE**
BELEUCHTUNGSMODUL FÜR EINEN GLASFREIEN SCHEINWERFER EINES KRAFTFAHRZEUGES
LIGHTING MODULE FOR A GLASS-FREE HEADLIGHT OF A MOTOR VEHICLE

(30) Priorité: 27.09.2018 FR 1858839
(43) Date de publication de la demande: 04.08.2021
(73) Titulaire: PSA Automobiles SA, 78300 Poissy (FR)
(72) Inventeur: ROYER, Guillaume, 91680 BRUYERES LE CHATEL (FR); ROSSO, Serge, 90100 ST DIZIER L'EVEQUE (FR); LARRIBEAU, Nathalie, 78310 MAUREPAS (FR)
(86) Numéro de dépôt international: PCT/FR2019/052096
(87) Numéro de publication internationale: WO 2020/065167

(56) Documents cités:
- DE-A1- 1 530 562
- DE-A1- 1 630 320
- DE-A1- 1 920 332
- DE-A1-102013 009 178
- FR-A1- 3 015 003
- FR-A1- 3 026 823
- FR-A1- 3 032 513
- FR-A1- 3 044 981
- FR-A1- 3 049 692
- GB-A- 1 295 126
- US-A1- 2005 047 166
- US-A1- 2013 100 689

## Description

L'invention se rapporte au domaine des systèmes d'éclairage et de signalisation des véhicules automobiles. L'invention concerne plus particulièrement un module d'éclairage pour un projecteur dépourvu de glace extérieure de couverture.

On connait de FR3026823, FR3044981 ou FR3015003 des projecteurs pour véhicule automobile qui sont dépourvus de glace extérieure de couverture (ou glace de protection). De tels projecteurs comportent un ou plusieurs modules d'éclairage, un tel module comportant une lentille montée dans un boîtier, la lentille étant destinée à transmettre le faisceau lumineux émis par une source lumineuse incluse dans le boîtier. En raison de l'absence de glace de couverture, on s'assure généralement que la lentille soit en retrait des bords avant du corps du boîtier du module d'éclairage, ce qui peut impliquer de prévoir des appendices fixés au boitier, ces appendices formant une avancée par rapport au boitier, respectivement en partie inférieure et en partie supérieure du boitier du module d'éclairage.

Une telle configuration présente l'inconvénient de favoriser l'accumulation d'éléments étrangers, tels que de la poussière, de la terre des cailloux, etc., sur l'appendice inférieur, devant la lentille. En raison de l'absence de glace de protection extérieure, cette accumulation peut dégrader fortement la qualité de l'éclairage.

La présente invention a pour but de remédier aux inconvénients de l'état de la technique, et plus particulièrement ceux ci-dessus exposés, en proposant un module d'éclairage configuré pour éviter toute accumulation d'éléments indésirables devant la lentille.

À cet effet, l'invention concerne un module d'éclairage pour projecteur de véhicule automobile dépourvu de glace de couverture, le module d'éclairage comportant un boîtier à l'intérieur duquel est installée au moins une lentille, le boîtier comportant un prolongement au niveau d'un bord avant inférieur, le prolongement comportant au moins une lumière permettant l'écoulement d'un flux d'air en avant de la lentille.

Ainsi, en prévoyant au moins une lumière pratiquée dans le prolongement inférieur du boîtier du module d'éclairage conforme à l'invention, on génère naturellement un flux d'air devant la lentille en cas de roulage du véhicule, ce flux d'air traversant le prolongement du boîtier. Grâce à ce flux d'air, on empêche toute accumulation de corps étranger susceptible de dégrader les performances du module d'éclairage. On notera que l'avant du module d'éclairage correspond à la partie émettant le faisceau lumineux, donc la partie orientée vers l'avant du véhicule sur lequel le module d'éclairage est installé. De même, le bord avant inférieur est le bord inférieur lorsque le module d'éclairage est en position de fonctionnement, c'est-à-dire tel que monté sur un véhicule.

Dans une réalisation, le prolongement du boîtier comporte deux lumières disjointes.

Dans une réalisation, chacune des deux lumières disjointes est disposée à proximité d'un bord latéral du prolongement du boîtier correspondant.

Dans une réalisation, le prolongement du boîtier comporte une lumière centrale unique.

L'invention concerne également un projecteur pour véhicule automobile, comportant un ou plusieurs modules d'éclairage tels que défini ci-dessus.

L'invention concerne également un véhicule automobile comportant au moins un module d'éclairage tel que défini ci-dessus.

La présente invention sera mieux comprise à la lecture de la description détaillée qui suit, faite en référence aux dessins annexés, dans lesquels :
- la figure 1 est une vue partielle en perspective de l'avant d'un véhicule automobile équipé d'un projecteur comportant deux modules d'éclairage sans de glace conformes à l'invention ;
- la figure 2 est une vue de face partielle d'un module d'éclairage conforme à l'invention.

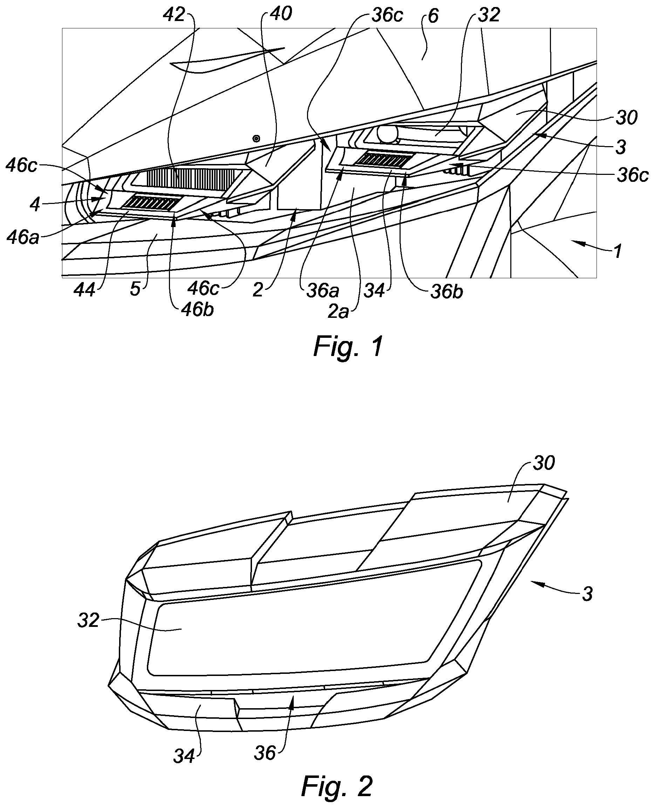

La figure 1 représente partiellement un véhicule automobile 1 comportant à l'avant deux projecteurs 2 sans glace équipés de modules d'éclairage conformes à l'invention (seul le projecteur avant gauche étant représenté sur la vue partielle de la figure 1). Le projecteur 2 comporte dans l'exemple deux modules d'éclairage 3, 4 sans glace, c'est-à-dire dépourvus de glace de protection. Les deux modules d'éclairage 3, 4 sont fixés à un support 2a du projecteur 2. Les deux modules d'éclairage 3, 4 sont disposés dans un espace délimité notamment par la partie supérieure du pare-chocs 5 avant et par un élément de carrosserie 6, ou prolongateur de capot 6, situé dans le prolongement du capot avant (cet élément de carrosserie étant couramment désigné par son appellation anglaise « *soft nose* »). Cet espace contenant les modules d'éclairage est ouvert vers l'avant puisque le projecteur 2 est dépourvu de glace de protection.

Chaque module d'éclairage 3, 4 est, conformément à l'invention, dépourvu de glace de protection (ou glace de couverture), et comporte un boîtier 30, 40 à l'intérieur duquel est fixée une lentille 32, 42. Chaque lentille 32, 42 est destinée à transmettre le faisceau lumineux émis par une source lumineuse du module d'éclairage 3, 4 correspondant, et comportant par exemple une ou plusieurs diodes électroluminescentes. Chaque module d'éclairage comporte, au niveau d'un bord avant inférieur du boîtier, un prolongement 34, 44, prolongeant la partie inférieure du boîtier, sous la lentille 32, 42. Dans l'exemple le prolongement 34, 44 est rapporté et fixé au boîtier, mais le prolongement peut alternativement être venu de matière avec le boîtier.

Conformément à l'invention, le prolongement 34, 44, de chaque module d'éclairage comporte au moins une lumière 36a, 36b, 46a, 46b, permettant, en cas de roulage d'un véhicule automobile sur lequel est monté le module d'éclairage, de générer un flux d'air devant la lentille du module d'éclairage correspondant. Ce flux d'air traverse le prolongement 34, 44 correspondant, empêchant ainsi l'accumulation de corps étrangers. Dans l'exemple de la figure 1, chaque prolongement 34, 44 comporte deux lumières 36a, 36b, 46a, 46b, disposées de part et d'autre d'un plan vertical médian du module d'éclairage, à proximité de bords latéraux 36c, 46c du prolongement correspondant 34, 44.

La figure 2 illustre une variante de réalisation de l'invention. La figure 2 représente partiellement le module d'éclairage 3 vu de face. Dans cette variante, le module d'éclairage 3 comporte un prolongement 34 comportant une lumière 36 centrale unique. La lumière 36 centrale se prolonge latéralement jusqu'à proximité des bords latéraux du prolongement 34, afin de générer un flux d'air devant toute la largeur de la lentille 32.

L'invention permet d'éviter toute dégradation des performances d'un module d'éclairage sans glace, en générant naturellement un flux d'air devant la lentille en cas de roulage du véhicule équipé, évitant ainsi l'accumulation de saletés et de corps étrangers.

## Revendications

1. Module d'éclairage (3, 4) pour projecteur (2) de véhicule automobile (1) dépourvu de glace de couverture, le module d'éclairage (3, 4) comportant un boîtier (30, 40) à l'intérieur duquel est installée au moins une lentille (32, 42), le boîtier comportant un prolongement (34, 44) au niveau d'un bord avant inférieur, le prolongement (34, 44) comportant au moins une lumière (36, 36a, 36b, 46a, 46b) permettant l'écoulement d'un flux d'air en avant de la lentille (32, 42).

2. Module d'éclairage (3, 4) selon la revendication précédente, dans lequel le prolongement (34, 44) du boîtier (30, 40) comporte deux lumières (36a, 36b, 46a, 46b) disjointes.

3. Module d'éclairage (3, 4) selon la revendication précédente, dans lequel chacune des deux lumières (36a, 36b, 46a, 46b) disjointes est disposée à proximité d'un bord latéral (36c, 46c) du prolongement (34, 44) du boîtier (30, 40) correspondant.

4. Module d'éclairage (3) selon la revendication 1, dans lequel le prolongement (34) du boîtier (30) comporte une lumière (36) centrale unique.

5. Projecteur pour véhicule automobile (1), comportant un ou plusieurs modules d'éclairage (3, 4) conformes à l'une des revendications précédentes.

6. Véhicule automobile (1) comportant au moins un module d'éclairage (1) conforme à l'une des revendications 1 à 4.

## Patentansprüche

1. Beleuchtungsmodul (3, 4) für einen Scheinwerfer (2) eines Kraftfahrzeugs (1) ohne Abdeckscheibe, wobei das Beleuchtungsmodul (3, 4) ein Gehäuse (30, 40) umfasst, in dessen Innerem mindestens eine Linse (32, 42) installiert ist, wobei das Gehäuse eine Verlängerung (34, 44) an einer unteren Vorderkante aufweist, wobei die Verlängerung (34, 44) mindestens ein Licht (36, 36a, 36b, 46a, 46b) aufweist, das den Fluss eines Luftstroms vor der Linse (32, 42) ermöglicht.

2. Beleuchtungsmodul (3, 4) nach dem vorhergehenden Anspruch, bei dem die Verlängerung (34, 44) des Gehäuses (30, 40) zwei disjunkte Lumen (36a, 36b, 46a, 46b) aufweist.

3. Beleuchtungsmodul (3, 4) nach dem vorhergehenden Anspruch, wobei jedes der beiden disjunkten Lumen (36a, 36b, 46a, 46b) in der Nähe einer Seitenkante (36c, 46c) des Fortsatzes (34, 44) des entsprechenden Gehäuses (30, 40) angeordnet ist.

4. Beleuchtungsmodul (3) nach Anspruch 1, wobei die Verlängerung (34) des Gehäuses (30) ein einzelnes zentrales Licht (36) aufweist.

5. Scheinwerfer für Kraftfahrzeuge (1) mit einem oder mehreren Beleuchtungsmodulen (3, 4) nach einem der vorhergehenden Ansprüche.

6. Kraftfahrzeug (1) mit mindestens einem Beleuchtungsmodul (1), das einem der Ansprüche 1 bis 4 entspricht.

## Claims

1. Lighting module (3, 4) for a headlamp (2) of a motor vehicle (1) without a cover lens, the lighting module (3, 4) having a housing (30, 40) inside which at least one lens (32, 42) is installed, the housing having an extension (34, 44) at a lower front edge, the extension (34, 44) having at least one light (36, 36a, 36b, 46a, 46b), the housing having an extension (34, 44) at a lower front edge, the extension (34, 44) having at least one aperture (36, 36a, 36b, 46a, 46b) for the flow of air in front of the lens (32, 42).

2. The lighting module (3, 4) of the preceding claim, wherein the extension (34, 44) of the housing (30, 40) includes two disjointed lumens (36a, 36b, 46a, 46b).

3. The lighting module (3, 4) according to the preceding claim, wherein each of the two disjointed lumens (36a, 36b, 46a, 46b) is disposed proximate a side edge (36c, 46c) of the extension (34, 44) of the corresponding housing (30, 40).

4. The lighting module (3) of claim 1, wherein the extension (34) of the housing (30) has a single central light (36).

5. Motor vehicle headlamp (1), comprising one or more lighting modules (3, 4) according to one of the preceding claims.

6. Motor vehicle (1) comprising at least one lighting module (1) in accordance with one of claims 1 to 4.
